# EUROPEAN PATENT SPECIFICATION

(11) **EP 1 630 926 B1**
(45) Date of publication and mention of the grant of the patent: **20.10.2010**
(21) Application number: 05018690.7
(22) Date of filing: 29.08.2005
(51) Int. Cl.: H02J 7/00

(54) **Power switching device in mobile communication terminal**
Stromschaltvorrichtung in einem Mobilfunkendgerät
Dispositif de commutation de puissance dans un terminal de communication mobile

(30) Priority: 31.08.2004 KR 2004069338
(43) Date of publication of application: 01.03.2006
(73) Proprietor: LG Electronics Inc., Seoul 150-721 (KR)
(72) Inventor: Choi, Woong-Gil, Anyang Gyeonggi-Do (KR)
(74) Representative: Katérle, Axel

(56) References cited:
- WO-A-99/12245
- GB-A- 2 332 824
- US-A- 6 011 323
- US-A1- 2004 110 542

## Description

### BACKGROUND OF THE INVENTION

### 1. Field of the Invention

The present invention relates to a mobile communications terminal, and particularly, to a power switching device in a mobile communications terminal capable of switching the power applied to a power amplifier module at a high speed.

### 2. Description of the Related Art

In general, a mobile communications terminal (hereinafter, referred to as a terminal) that has subscribed to a mobile communications system performs radio communications with another party through a communications network set by a mobile switching center within a service region. A terminal close to a base station outputs a transmit signal using low output power, while a terminal far from the base station amplifies and outputs the transmit signal using high output power. This power control of the terminal is typically performed by controlling a level of input power supplied to a power amplifier module (PAM) according to an output of the PAM or by performing inner loop power control.

Here, the PAM is a component that consumes the greatest amount of current in the terminal, and accordingly, its power should be switched at high speed so as to guarantee stable power supply for the PAM and minimize power consumption thereof.

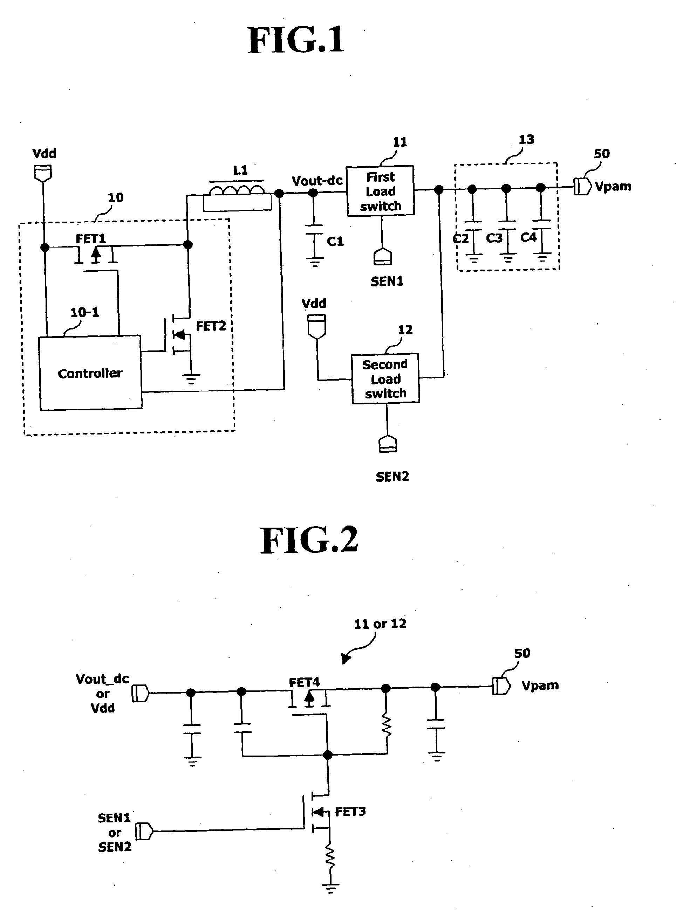

Figure 1 is a schematic view showing a power switching device of a related art mobile communications terminal.

As shown therein, the related art power switching device includes: a voltage regulator 10 for regulating a level of an output power Vdd of a battery; a first load switch 11 for transferring an output voltage Vout-dc of the voltage regulator 10 as a supply power Vpam of the PAM according to a switch enable signal SEN1; a second load switch 12 for transferring the battery power Vdd as the supply power Vpam of the PAM according to a switch enable signal SEN2; and a power decoupling unit 13 for removing noise of the supply power Vpam.

Moreover, reference symbols L1 and C1 denote an inductor and a capacitor (condenser), respectively, which form a smoothing unit for smoothing the output voltage Vout-dc.

The voltage regulator 10 is a DC-DC converter composed of two field effect transistors (FET1 and FET2) and one controller 10-1. The controller 10-1 controls the FET1 and FET2 to regulate the level of the output voltage Vout-dc.

The first and second load switches 11 and 12, as shown in Figure 2, includes a FET3 turned on by the switch enable signal SEN1 or SEN2, and a FET4 which turns on when the FET3 is turned on to thusly transfer the output voltage Vout-dc or the battery power Vdd to an output terminal 50. Here, the FET3 is an n-type FET, and the FET4 is a p-type FET. The power decoupling unit 13 includes three power decoupling capacitors (condensers) C2 to C4.

An operation of such constructed power switching device will now be explained as follows.

The basic concept of power switching involves the supplying of one of two different voltages as the supply voltage of the PAM according to the conditions of the terminal (or channel conditions).

The Vout-dc and the battery power Vdd used for power switching are shown in Figure 1. The Vout-dc is an output voltage of the voltage regulator 10. The controller 10-1 generates a Vout-dc of 1.5V which is voltage-dropped from the battery power Vdd of 4V by appropriately adjusting the frequencies of the FET1 and the FET2. The corresponding Vout-dc is then smoothed by the smoothing unit, namely, the inductor L1 and the capacitor C1, and is input into the first load switch 11.

Therefore, the first and second load switches 11 and 12 supply the output voltage Vout-dc of the voltage regulator 10 or the battery power Vdd as the supply voltage Vpam of the PAM according to the switch enable signal SEN1 or SEN2. An MPU (Microprocessor Unit) of the terminal determines the switch enable signals SEN1 and SEN2 by considering, for instance, a channel condition and a (physical) distance between the terminal and the base station.

That is, when transmitting a radio signal to the base station, the MPU checks the distance between the terminal and the base station by performing inner loop power control, and then determines whether to maximize the output power of the PAM (S10 and S20).

When the terminal is far from the base station and thus signals should be transmitted at maximum output power, the MPU turns on the second load switch 12 so as to supply the Vdd of 4V as the PAM power Vpam (SEN1 at low level, and SEN2 at high level) (S30). On the contrary, when the terminal is close to the base station and signals can be transmitted at normal output power, the MPU turns on the first load switch 11 so as to input the Vout-dc of 1.5V as the PAM power Vpam (SEN1 at high level and SEN2 at low level) (S40 and S50).

In this case, the first and second load switches 11 and 12, as shown in Figure 2, are turned on when the FET4 is turned on by the switch enable signals SEN1 and SEN2 having low levels. When the FET4 is turned on, the FET3 is also turned on due to a ground voltage at low level.

According to the levels of the switch enable signals SEN1 and SEN2 outputted from the MPU, either the Vout-dc of 1.5V or the Vdd of 4V is supplied as the PAM power Vpam through the output terminal 50. Here, the power decoupling capacitors C2 to C4 of the power decoupling unit 13 which are connected in parallel to the output terminal 50, operate to remove noise from the power Vpam applied to the PAM, and accordingly the power of the PAM can be supplied in a stable manner.

Therefore, the PAM amplifies a radio (wireless) signal depending on the power Vpam inputted through the output terminal 50, and transmits such to the base station (S60).

However, in the related art power switching device, when power of the PAM is switched by using the power decoupling capacitors, problems may occur with respect to high speed switching and problems in providing stable current supply after the power switching are caused by the electrostatic capacity of the power decoupling capacitors. Due to these problems, for situations where inner loop control characteristics must be satisfied, such as in a CDMA or WCDMA mobile communications terminal, power control may not be appropriately performed by the aforementioned related art power switching device.

For instance, when the supply voltage Vpam of the PAM, namely, a voltage of the output terminal 50 (or an input terminal of the PAM) is charged to 4V, a situation where the second load switch 12 is disabled and the first load switch 11 is enabled in order to make the voltage at the output terminal 50 to be 1.5V should be considered. In this case, as the voltage of the output terminal 50 is discharged, the power switching speed is increased by as much as the time needed for the discharging. More particularly, until the voltage charged in the C2 to C4 is completely discharged, the voltage at the output terminal 50 does not fall below the Vout-dc of 1.5V. That is, because the discharging time depends on the electrostatic capacity of the power decoupling capacitors C2 to C4, when an on/off time of each FET within each load switch 11 and 12 is assumed as 't', a total switching time of the related art power switching device can be increased as much as 4t + (discharging time of C2, C3 and C4).

Furthermore, in the related art, when enabling the first load switch for maintaining the supply voltage of 1.5V of the PAM, a reverse current (i.e., a reverse discharge toward the first load switch) may be generated due to the power decoupling capacitors C2 to C4, and a reverse voltage generated from the output terminal 50 (or the input terminal of the PAM) is leaked toward the voltage regulator 10, thereby resulting in distortion of the output of the voltage regulator 10.

United States Patent 6,011,323 discloses a system for switching between the DC power of a host device and an auxiliary power source or combining the two power sources.

### SUMMARY OF THE INVENTION

Therefore, it is an object of the present invention to provide a power switching device in a mobile communications terminal capable of performing high speed power switching by using a more simple structure.

It is another object of the present invention to provide a power switching device in a mobile communications terminal capable of performing stable power switching and providing stable current supply by preventing a reverse current and a reverse voltage from being generated during power switching.

To achieve these and other advantages and in accordance with the purpose of the present invention, as embodied and broadly described herein, there is provided a power switching device in a mobile communications terminal comprising a voltage regulator for generating a first voltage to be used as power of a power amplifier module, a battery for outputting a second voltage to be used as the power of the power amplifier module, and a load switch for switching the second voltage into the power of the power amplifier module according to an output power level of a transmit signal.

The power switching device further comprises a power decoupling unit for removing noise from the second voltage inputted into the load switch.

The power switching device further comprises a smoothing unit for smoothing an output voltage of the voltage regulator.

The power switching device further comprises a diode connected in series between an output terminal of the voltage regulator and an input terminal of the power amplifier module.

Preferably, the load switch is connected in parallel to the output terminal of the voltage regulator to thusly switch the second voltage into the power of the power amplifier module when transmitting a radio signal by a maximum output power.

Preferably, the first voltage, which is used as the power of the power amplifier module when transmitting a radio signal by a normal output power, is obtained by dropping the second voltage down to a particular level.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a schematic diagram of a power switching device in a mobile communications terminal according to the related art;
Figure 2 is a detailed schematic diagram of first and second load switches shown in Figure 1;

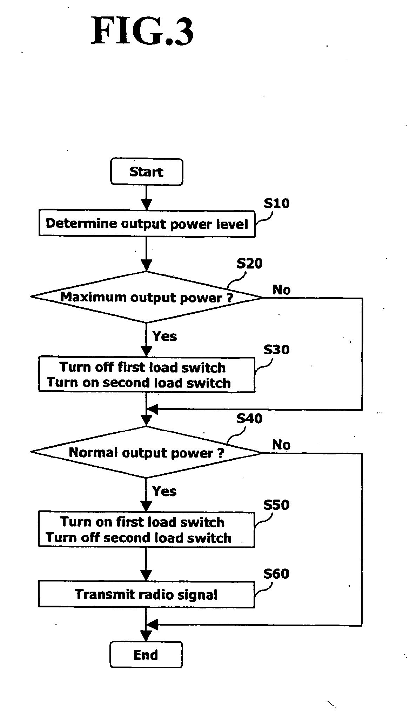

Figure 3 is a flow chart illustrating a power switching method in a mobile communication terminal according to the related art;
Figure 4 is a schematic diagram of a power switching device in a mobile communications terminal according to an embodiment of the present invention;
Figure 5 is a diagram for comparing each power switching time of the related art and the present invention; and

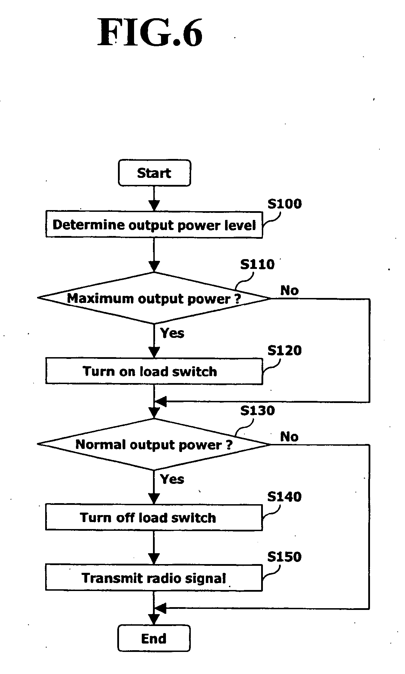

Figure 6 is a flow chart illustrating a power switching device in a mobile communications terminal according to the present invention.

### DETAILED DESCRIPTION OF THE INVENTION

Reference will now be made in detail to some preferred embodiments of the present invention, examples of which are illustrated in the accompanying drawings.

The present invention proposes a power switching device capable of performing power switching more simply and at higher speed than that of the related art power switching circuit, and removing reverse voltages and reverse currents generated during the power switching. Especially, the present invention provides a power switching device by which power consumption of a mobile communications terminal can be reduced and the inner loop power control characteristics required for CDMA or WCDMA can be satisfied.

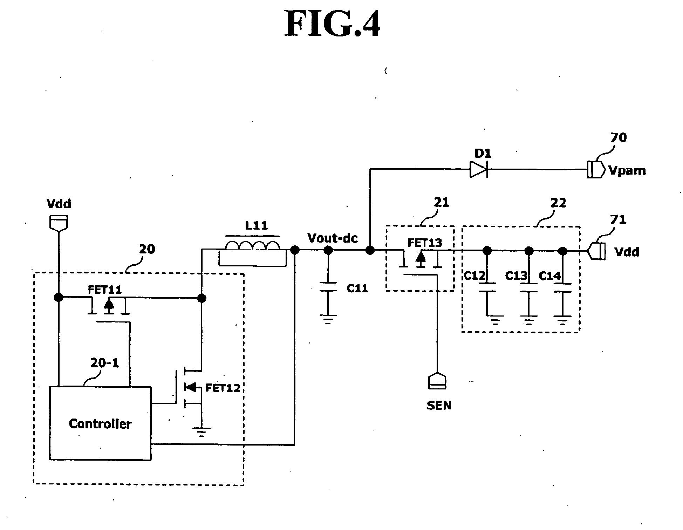

Figure 4 is a schematic diagram of a power switching device in a mobile communications terminal according to an embodiment of the present invention.

As shown in Figure 4, a power switching device in a mobile communications terminal according to the present invention includes: a voltage regulator 20 for regulating a level of a battery power Vdd and supplying the level-regulated battery power Vdd as a supply power Vpam of a power amplifier module PAM; a load switch 21 for supplying the battery voltage Vdd as the supply voltage Vpam of the PAM according to a switch enable signal SEN; a power decoupling unit 22 for removing noise from the battery power Vdd; and a diode D1 for removing a flow of reverse voltages generated at an output terminal 70 (i.e., an input terminal of the PAM) when performing power switching.

The voltage regulator 20 is comprised of two FETs (FET11 and FET12) and a controller 20-1, and regulates a level of the output power Vdd of the battery so as to generate an output voltage Vout-dc of 1.5V. The output voltage Vout-dc of 1.5V is supplied as the power Vpam of the PAM when a mobile communications terminal transmits radio signals using normal output power.

The load switch 21 includes one switching FET and switches the battery power Vdd into the PAM. The battery power Vdd is supplied as the power Vpam of the PAM when transmitting radio signals using maximum output power.

The power decoupling unit 22 includes power decoupling capacitors C12 to C14 connected in parallel between the load switch 21 and an input terminal 71 of the battery power Vdd. In addition, reference symbols L11 and C11 refer to an inductor and a capacitor, respectively, which form a smoothing unit for smoothing the output voltage Vout-dc.

An operation of such constructed power switching device in the mobile communications terminal will now be explained with reference to the accompanying drawings as follows.

In the present invention, power switching is performed by using only one load switch. That is, in the present invention, the output voltage Vout-dc of the voltage regulator 20 is directly supplied to the PAM, and the battery power Vdd of 4V is selectively supplied to the PAM through the load switch 21. While this, an operation of the load switch 21 is controlled by a switch enable signal SEN outputted from an MPU (MicroProcessor Unit).

First, when transmitting radio signals from the mobile terminal to a base station in order to perform radio communications in a mobile communications system, the MPU decides the particular level of an output power according to a (physical) distance between the terminal and the base station (S100).

When the terminal is far from the base station and thus signals should be transmitted at maximum output power (S110), the MPU outputs a switch enable signal SEN of a high level to turn on a FET13 of the load switch 21 (S120). Once the FET13 is turned on, the battery power Vdd of 4V is supplied as the power Vpam of the PAM via the load switch 21. In this case, the power decoupling capacitors C12 to C14 of the power decoupling unit 22 can be used to remove noise components from the battery power Vdd.

In contrast, when the terminal is (physically) close to the base station and thus signals should be transmitted at normal output power, that is, when the power should be switched from Vdd to Vout-dc, the MPU outputs a switch enable signal SEN having a low level (i.e., logical LOW) so as to turn off the FET 13 of the load switch 21.

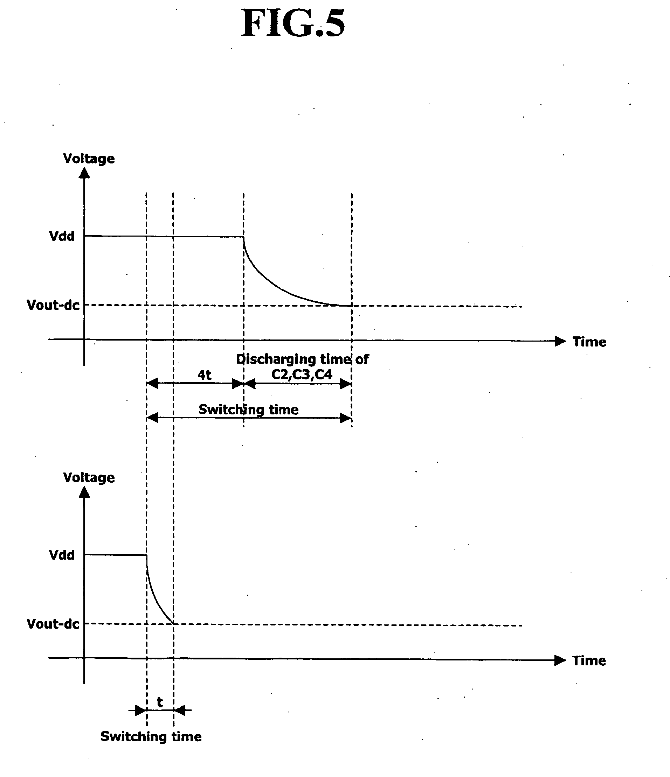

When the load switch 21 is turned off, the Vout-dc of 1.5V is supplied to the PAM. As a result, the power Vpam supplied to the PAM, that is, the voltage of the output terminal 70 (or an input terminal of the PAM), as shown in Figure 5, drastically dropped from 4V to 1.5V. At this time, the load switch 21 which has been turned off can prevent any reverse currents (reverse discharge toward the load switch) from being generated by the power decoupling capacitors C12 to C14. Therefore, assuming that an on/off time of the FET13 of the load switch 21 is 't', as shown in Figure 5, the power switching time according to the present invention can be reduced to approximately one fourth of 4t + (a discharging time of C2 to C4).

Furthermore, when the load switch 21 is turned off and thus the Vout-dc of 1.5V is supplied as the power Vpam of the PAM, the diode D1 provided at the output terminal 70 can operate to thereby block any reverse voltage leaked toward the voltage regulator 20, which results in minimizing output distortions of the voltage regulator 20.

Therefore, the PAM amplifies a radio signal according to the power Vpam supplied to the output terminal 70 by the power switching (Vdd→Vout-dc or Vout-dc→Vdd), namely, according to either the battery power Vdd of 4V or the Vout-dc of 1.5V, thereby allowing transmission of the amplified radio signal to the base station (S150).

As explained above, the present invention provides a power supply control device of a mobile communications terminal comprising: a voltage regulator receiving and processing an output of a power supply, and outputting a first output voltage for a Power Amplifier Module; a single load switch receiving and processing the output of the power supply, and outputting a second output voltage for the Power Amplifier Module; and a microprocessor controlling the voltage regulator and the single load switch to selectively provide the first output voltage or the second output voltage to the Power Amplifier Module via the voltage leakage blocker according to a signal transmission environment.

Here, the voltage leakage blocker can be a diode that minimizes reverse voltage leakage from reaching the voltage regulator. Also, the signal transmission environment can be based upon a physical location of the mobile communications terminal with respect to a base station or can be based upon a transmission channel condition.

It can be understood that the signal transmission environment may be based upon a desired signal strength level regardless of the physical distance between the mobile communications terminal and a base station. For example, the desired signal strength necessary to achieve proper communications may be influenced by the fact that the user (having the mobile communications terminal) is on the move (i.e., the issue of mobility should be considered), or the environment may have many sources of potential signal interference (such as a crowded urban downtown area with many tall building, with large buildings, underground location, etc.). Thus, depending upon the particular communications environment, the present invention can be applied to provided the desired switching of output supply power for the mobile communications terminal.

As aforementioned, in the present invention, the power switching circuit having a simple structure (compared to that of the related art) is provided such that a switching speed can be increased by about more than four times as compared with the related art, and reverse currents from the power decoupling capacitor and reverse voltages generated from the output terminal can effectively be prevented from being generated when performing power switching according to the present invention.

Furthermore, in the present invention, power can be switched by using only a single load switch compared to the more complicated two load switches in the related art, and accordingly the number of necessary control signals can be reduced, and particularly the manufacturing costs and maintenance costs can effectively be reduced compared with the related art.

## Claims

1. A power switching device for a mobile communications terminal, comprising:
a power supply voltage produced by a power supply;
a voltage regulator (20) electrically coupled to the power supply to receive the power supply voltage and electrically connected to an input terminal of a power amplifier module to output a first voltage to the input terminal; **characterized by** a load switch (21) for switching the power supply voltage, the load switch having a first terminal connected to the input terminal in parallel with the voltage regulator (20), wherein a second terminal of the load switch (21) is electrically coupled to receive the power supply voltage through a power decoupling unit (22) for removing noise from the power supply voltage, said power decoupling unit (22) comprising a capacitance, and wherein the load switch (21) switches based on an output power level of a transmit signal.

2. The power switching device of claim 1, wherein the power supply is a battery and the power supply voltage is a battery voltage of the battery.

3. The power switching device of claim 1, wherein the first voltage has a predetermined voltage value which is lower than the power supply voltage.

4. The power switching device of claim 1, further comprising a smoothing unit for smoothing the first voltage output by the voltage regulator (20), the smoothing unit connected in series between the voltage regulator (20) and the input terminal.

5. The power switching device of claim 1, further comprising a voltage leakage blocker electrically connected to the input terminal.

6. The power switching device of claim 5, wherein the voltage leakage blocker comprises a diode.

7. The power switching device of claim 1, wherein the load switch (21) comprises a field effect transistor.

8. The power switching device of claim 1, wherein the power decoupling unit (22) comprises one or more capacitors.

9. The power switching device of claim 1, wherein the load switch (21) is switched to input the first voltage as the power of the power amplifier module when the mobile communications terminal transmits radio signals at normal output power.

10. The power switching device of claim 1, the load switch (21) is switched to input the power supply voltage as the power of the power amplifier module when the mobile communications terminal transmits radio signals at maximum output power.

11. The power switching device of claim 1, wherein the load switch (21) is switched based upon a physical location of the mobile communications terminal with respect to a base station.

12. The power switching device of claim 1, wherein the load switch (21) is switched based upon a transmission channel condition of the transmit signal.

13. The power switching device of claim 1, wherein the load switch (21) is switched based upon a desired signal strength level of the transmit signal.

## Patentansprüche

1. Spannungsschaltgerät für ein mobiles Kommunikationsendgerät, aufweisend:
eine Versorgungsspannung, die von einer Spannungsversorgung erzeugt wird;
einen Spannungsregler (20), der elektrisch mit der Spannungsversorgung gekoppelt ist, um die Versorgungsspannung zu erhalten, und der elektrisch mit einem Eingangsanschluss eines Leistungsverstärkermoduls verbunden ist, um eine erste Spannung an den Eingangsanschluss auszugeben;
**gekennzeichnet durch**
einen Lastschalter (21) zum Schalten der Versorgungsspannung, wobei der Lastschalter einen ersten Anschluss hat, der mit dem Eingangsanschluss parallel zum Spannungsregler (20) verbunden ist, wobei ein zweiter Anschluss des Lastschalters (21) elektrisch so gekoppelt ist, dass er die Versorgungsspannung über eine Spannungsentkopplungseinheit (22) empfängt, um Rauschen aus der Versorgungsspannung zu entfernen, wobei die Spannungsentkopplungseinheit (22) eine Kapazität aufweist und wobei der Lastschalter (21) auf Basis eines Ausgangsspannungspegels eines Sendesignals schaltet.

2. Spannungsschaltgerät nach Anspruch 1, bei dem die Spannungsversorgung eine Batterie und die Versorgungsspannung eine Batteriespannung der Batterie ist.

3. Spannungsschaltgerät nach Anspruch 1, bei dem die erste Spannung einen vorgegebenen Spannungswert hat, der niedriger ist als die Versorgungsspannung.

4. Spannungsschaltgerät nach Anspruch 1, das ferner eine Glättungseinheit zum Glätten der vom Spannungsregler (20) ausgegebenen ersten Spannung aufweist, wobei die Glättungseinheit in Reihe zwischen dem Spannungsregler (20) und dem Eingangsanschluss geschaltet ist.

5. Spannungsschaltgerät nach Anspruch 1, das ferner eine Leckspannungssperre aufweist, die elektrisch mit dem Eingangsanschluss verbunden ist.

6. Spannungsschaltgerät nach Anspruch 5, bei dem die Leckspannungssperre eine Diode aufweist.

7. Spannungsschaltgerät nach Anspruch 1, bei dem der Lastschalter (21) einen Feldeffekttransistor aufweist.

8. Spannungsschaltgerät nach Anspruch 1, bei dem die Spannungsentkopplungseinheit (22) einen oder mehrere Kondensatoren aufweist.

9. Spannungsschaltgerät nach Anspruch 1, bei dem der Lastschalter (21) geschaltet wird, um die erste Spannung als Leistung des Leistungsverstärkermoduls einzugeben, wenn das mobile Kommunikationsendgerät Funksignale bei normaler Ausgangsleistung sendet.

10. Spannungsschaltgerät nach Anspruch 1, bei dem der Lastschalter (21) geschaltet wird, um die Versorgungsspannung als Leistung des Leistungsverstärkermoduls einzugeben, wenn das mobile Kommunikationsendgerät Funksignale bei maximaler Ausgangsleistung sendet.

11. Spannungsschaltgerät nach Anspruch 1, bei dem der Lastschalter (21) auf Basis eines physischen Ortes des mobilen Kommunikationsendgeräts relativ zu einer Basisstation geschaltet wird.

12. Spannungsschaltgerät nach Anspruch 1, bei dem der Lastschalter (21) auf Basis eines Zustands eines Übertragungskanals des Sendesignals geschaltet wird.

13. Spannungsschaltgerät nach Anspruch 1, bei dem der Lastschalter (21) auf Basis eines gewünschten Signalstärkepegels des Sendesignals geschaltet wird.

## Revendications

1. Dispositif de commutation de puissance pour un terminal de communications mobile, comprenant
une tension d'alimentation produite par une alimentation ;
un régulateur de tension (20) électriquement couplé à l'alimentation pour recevoir la tension d'alimentation et électriquement connecté à une borne d'entrée d'un module d'amplification de puissance pour délivrer en sortie une première tension vers la borne d'entrée ; **caractérisé par**
un commutateur de charge (21) destiné à commuter la tension d'alimentation, le commutateur de charge comportant une première borne connectée à la borne d'entrée en parallèle avec le régulateur de tension (20), dans lequel une deuxième borne du commutateur de charge (21) est électriquement couplée pour recevoir la tension d'alimentation par l'intermédiaire d'une unité de découplage de puissance (22) pour supprimer le bruit de la tension d'alimentation, ladite unité de découplage de puissance (22) comprenant une capacité, et dans lequel le commutateur de charge (21) effectue une commutation sur la base d'un niveau de puissance de sortie d'un signal transmis.

2. Dispositif de commutation de puissance selon la revendication 1, dans lequel l'alimentation est une batterie et la tension d'alimentation est une tension de batterie de la batterie.

3. Dispositif de commutation de puissance selon la revendication 1, dans lequel la première tension présente une valeur de tension prédéterminée qui est inférieure à la tension d'alimentation.

4. Dispositif de commutation de puissance selon la revendication 1, comprenant en outre une unité de lissage destinée à lisser la première tension délivrée en sortie par le régulateur de tension (20), l'unité de lissage étant connectée en série entre le régulateur de tension (20) et la borne d'entrée.

5. Dispositif de commutation de puissance selon la revendication 1, comprenant en outre un bloqueur de fuite de tension électriquement connecté à la borne d'entrée.

6. Dispositif de commutation de puissance selon la revendication 5, dans lequel le bloqueur de fuite de tension comprend une diode.

7. Dispositif de commutation de puissance selon la revendication 1, dans lequel le commutateur de charge (21) comprend un transistor à effet de champ.

8. Dispositif de commutation de puissance selon la revendication 1, dans lequel l'unité de découplage de puissance (22) comprend un ou plusieurs condensateurs.

9. Dispositif de commutation de puissance selon la revendication 1, dans lequel le commutateur de charge (21) est commuté pour délivrer en entrée la première tension en tant que puissance du module d'amplification de puissance lorsque le terminal de communications mobile transmet des signaux radio à une puissance de sortie normale.

10. Dispositif de commutation de puissance selon la revendication 1, dans lequel le commutateur de charge (21) est commuté pour délivrer en entrée la tension d'alimentation en tant que puissance du module d'amplification de puissance lorsque le terminal de communications mobile transmet des signaux radio à une puissance de sortie maximale.

11. Dispositif de commutation de puissance selon la revendication 1, dans lequel le commutateur de charge (21) est commuté sur la base d'un emplacement physique du terminal de communications mobile par rapport à une station de base.

12. Dispositif de commutation de puissance selon la revendication 1, dans lequel le commutateur de charge (21) est commuté sur la base d'une condition de canal de transmission du signal transmis.

13. Dispositif de commutation de puissance selon la revendication 1, dans lequel le commutateur de charge (21) est commuté sur la base d'un niveau d'intensité de signal souhaité du signal transmis.
